(19) Europäisches Patentamt

European Patent Office

Office européen des brevets

(11) **EP 2 369 300 A2**

(12) **EUROPEAN PATENT APPLICATION**

(43) Date of publication:
28.09.2011 Bulletin 2011/39

(51) Int Cl.:
**G01C 22/00** (2006.01)

(21) Application number: 11158923.0

(22) Date of filing: 18.03.2011

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 25.03.2010 JP 2010071078
25.03.2010 JP 2010071079
21.09.2010 JP 2010211250
26.01.2011 JP 2011014509

(71) Applicant: **Seiko Instruments Inc.**
**Chiba-shi, Chiba (JP)**

(72) Inventors:
• **Sakai, Satoshi**
**Chiba-shi, Chiba (JP)**

• **Kato, Kazuo**
**Chiba-shi, Chiba (JP)**
• **Tsubata, Keisuke**
**Chiba-shi, Chiba (JP)**
• **Sugai, Yoshinori**
**Chiba-shi, Chiba (JP)**
• **Ihashi, Tomohiro**
**Chiba-shi, Chiba (JP)**
• **Nakamura, Hisao**
**Chiba-shi, Chiba (JP)**
• **Noguchi, Eriko**
**Chiba-shi, Chiba (JP)**
• **Takakura, Akira**
**Chiba-shi, Chiba (JP)**

(74) Representative: **Cloughley, Peter Andrew**
**Miller Sturt Kenyon**
**9 John Street**
**London WC1N 2ES (GB)**

(54) **Electronic Apparatus and Program**

(57) A calculation unit calculates a magnitude of acceleration in at least one of three separate directions and calculates a synthesized value indicating the magnitudes of the accelerations in the three directions based on the calculated magnitude of the acceleration and the acceleration in the direction separate from at least one of the directions.

FIG. 2

**Description**

The present invention relates to an electronic apparatus, a pedometer, and a program capable of measuring the number of steps when a user is walking or running.

This application claims the benefit of Japanese Patent Application No. 2010-071078, filed March 25, 2010, Japanese Patent Application No. 2010-071079, filed March 25, 2010, and Japanese Patent Application No. 2010-211250, filed September 21, 2010, the contents of which are incorporated herein by reference.

Up to now, a pedometer has been used which detects a user's walking by a sensor and measures the number of steps when a user wears the pedometer on his or her arm or waist or puts the pedometer in a portable bag.

There is known a pedometer in which a plurality of body movement sensors is disposed in different detection directions of body movement, one of the body movement sensors is selected based on the outputs of the respective body movement sensors, and an output value of the selected body movement sensor is used to detect the number of steps (for example, see Japanese Patent No. 3543778). However, when a sensor used in the pedometer is selected, the plurality of sensors is used, but only the selected sensor is used in measuring the number of steps. Accordingly, when the number of steps is detected, the small number of sensors is used. Therefore, a problem may arise in that the accuracy of the pedometer deteriorates.

In order to resolve this problem, there is known a pedometer in which three acceleration sensors are disposed so as to be perpendicular to each other, and the result (step number signal) obtained by squaring signals detected by the acceleration sensors and calculating the sum of the squares is used to detect the number of steps (for example, see JP-A-2005-038018).

However, the technique disclosed in JP-A-2005-038018 has the problem that the number of steps is sometimes not detected.

The invention provides an electronic apparatus, a pedometer, and a program capable of detecting the number of steps.

According to an aspect of the present application, there is provided an electronic apparatus including a calculation unit calculating a magnitude of an acceleration in at least one of three separate directions and calculating a synthesized value indicating the magnitudes of the accelerations in the three directions based on the calculated magnitude of the acceleration and the acceleration in the direction separate from at least one of the directions.

The electronic apparatus according to another aspect of the present application may further include a first acceleration sensor detecting the acceleration in a first direction and outputting a first signal corresponding to this acceleration; a second acceleration sensor detecting the acceleration in a second direction perpendicular to the first direction and outputting a second signal corresponding to this acceleration; and a third acceleration sensor detecting the acceleration in a third direction perpendicular to a plane uniquely specified by the first and second directions and outputting a third signal corresponding to this acceleration. The calculation unit may include a plane acceleration calculation unit calculating a value indicating the magnitude of the acceleration on the plane uniquely specified by the first and second directions based on the first and second signals, and a synthesized value computation unit calculating the synthesized value based on the value indicating the magnitude of the acceleration on the plane and the third signal.

The electronic apparatus according to another aspect of the present application may further include a display unit displaying information on a display surface. The plane uniquely specified by the first and second directions may be parallel to the display surface of the display unit.

In the electronic apparatus according to another aspect of the present application, the calculation unit may calculate the synthesized value so that a ratio of a signal to noise is higher compared to the synthesized value indicating the magnitudes of the accelerations in the three directions.

The electronic apparatus according to another aspect of the present application may further include an acceleration sensor detecting accelerations in three-axis directions perpendicular to each other and outputting acceleration signals X, Y, and Z corresponding to the accelerations in the axis directions, respectively. The calculation unit may calculate the synthesized value S using the acceleration signals X, Y, and Z by an expression $S=(|XY|+|YZ|+|ZX|/|X|+|Y|+|Z|)$.

In the electronic apparatus according to another aspect of the present application, the calculation unit includes an absolute value data calculation unit calculating absolute values of the acceleration signals X, Y, and Z and absolute values of products XY, YZ, and ZX between the acceleration signals X, Y, and Z and storing the absolute values as absolute value data in an absolute data storage unit, an addition data calculation unit calculating a product sum $(|XY|+|YZ|+|ZX|)$ and a sum $(|X|+|Y|+|Z|)$ of the absolute value data stored in the absolute value data storage unit and storing the product sum and the sum in an addition data storage unit, and a division data calculation unit calculating the synthesized value S by dividing the product sum $(|XY|+|YZ|+|ZX|)$ stored in the addition data storage unit by the sum $(|X|+|Y|+|Z|)$.

The electronic apparatus according to another aspect of the present application may further include an acceleration sensor detecting accelerations in three-axis directions perpendicular to each other and outputting acceleration signals X, Y, and Z corresponding to the accelerations in the axis directions, respectively. The calculation unit may calculate the synthesized value S using the acceleration signals X, Y, and Z by an expression $S=(|X|^n+|Y|^n+|Z|^n)$, where n is an integer equal to or larger than 3.

In the electronic apparatus according to another aspect of the present application, the calculation unit includes an absolute value data calculation unit calculating absolute values of the acceleration signals X, Y, and Z and storing the absolute values as absolute value data in an absolute value data storage unit, an n-th power value data calculation unit calculating n-th power values of the respective absolute value data stored in the absolute value data storage unit and storing the n-th power values as n-th power value data in an n-th power value data storage unit, and an addition data calculation unit calculating the synthesized value S by adding the respective n-th power value data stored in the n-th power value storage unit.

In the electronic apparatus according to another aspect of the present application, a plurality of the integers n equal to or larger than 3 may be prepared and the calculation unit calculates the synthesized value S by changing the integer n according to a level or a period of the synthesized value S.

The electronic apparatus according to another aspect of the present application may further include an acceleration sensor detecting accelerations in three-axis directions perpendicular to each other and outputting acceleration signals X, Y, and Z corresponding to the accelerations in the axis directions, respectively. The calculation unit may calculate the synthesized value S using the acceleration signals X, Y, and Z by an expression $S=(|X|^n+|Y|^n+|Z|^n)^{1/m}$, where n and m are the same integer or different integers equal to or larger than 3.

In the electronic apparatus according to another aspect of the present application, the calculation unit may include an absolute value data calculation unit calculating absolute values of the acceleration signals X, Y, and Z and storing the absolute values as absolute value data in an absolute value data storage unit, an n-th power value data calculation unit calculating n-th power values of the respective absolute value data stored in the absolute value data storage unit and storing the n-th power values as n-th power value data in an n-th power value data storage unit, an addition data calculation unit calculating an addition value obtained by adding the respective n-th power value data stored in the n-th power value storage unit and storing the addition value as addition data in an addition data storage unit, and an m-power root data calculation unit calculating the synthesized value S by calculating an m-th power root of the addition data stored in the addition data storage unit.

In the electronic apparatus according to another aspect of the present application, a plurality of the integers m and a plurality of the integers n equal to or larger than 3 may be prepared and the calculation unit calculates the synthesized value S by changing the integers m and n according to a level or a period of the synthesized value S.

The electronic apparatus according to another aspect of the present application may further include a step number detection unit detecting the number of steps based on the synthesized value.

The electronic apparatus according to another aspect of the present application may further include a threshold value calculation unit calculating a moving average value of the synthesized values. The step number detection unit may detect the number of steps based on the synthesized values and the moving average value.

The electronic apparatus according to another aspect of the present application may include a pedometer.

In the electronic apparatus according to another aspect of the present application, the acceleration sensors may include an MEMS tri-axial acceleration sensor or three mono-axial acceleration sensors disposed in three-axis directions perpendicular to each other.

According to another aspect of the present application, there is provided a program causing a computer of an electronic apparatus to execute a sequence of calculating a magnitude of an acceleration in at least one of three separate directions and calculating a synthesized value indicating the magnitudes of the accelerations in the three directions based on the calculated magnitude of the acceleration and the acceleration in the direction separate from at least one of the directions.

According to the invention, the number of steps can be detected.

Embodiments of the present invention will now be described by way of further example only and with reference to the accompanying drawings, in which:

FIG. 1 is a diagram illustrating the outer appearance of a pedometer according to a first embodiment of the invention.
FIG. 2 is a block diagram illustrating the configuration of the pedometer according to the first embodiment.
FIG. 3 is a schematic diagram illustrating the directions of accelerations detected by the pedometer when a user is walking as usual according to the first embodiment.
FIG. 4 is a graph illustrating the magnitudes of the accelerations detected in X, Y, and Z directions by the pedometer when the user is walking as usual according to the first embodiment.
FIG. 5 is a schematic diagram illustrating the directions of the accelerations detected by the pedometer when the user is walking, viewing a display unit according to the first embodiment.
FIG. 6 is a graph illustrating the magnitudes of the accelerations detected by the pedometer when the user is walking, viewing a display unit according to the first embodiment.

FIG. 7 is a graph illustrating a relationship between a synthesized value and the moving average of the synthesized values when the user is walking as usual according to the first embodiment.

FIG. 8 is a graph illustrating a relationship between a synthesized value and the moving average of the synthesized values when the user is walking, viewing the display unit according to the first embodiment.

FIG. 9 is a block diagram illustrating a pedometer according to a second embodiment.

FIG. 10 is a diagram for describing the pedometer according to the second embodiment.

FIG. 11 is a diagram for describing the pedometer according to the second embodiment.

FIG. 12 is a block diagram illustrating a pedometer according to a third embodiment.

FIG. 13 is a diagram for describing the pedometer according to the third embodiment.

FIG. 14 is a diagram for describing the pedometer according to the third embodiment.

FIG. 15 is a block diagram illustrating a pedometer according to a fourth embodiment.


First Embodiment


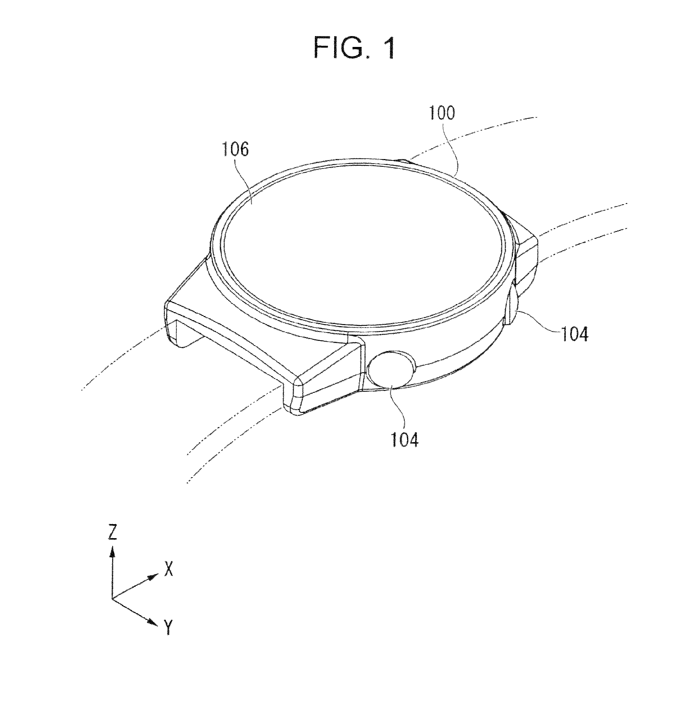

Hereinafter, a first embodiment of the invention will be described with reference to the drawings. In this embodiment, an example of a pedometer will be described as an example of an electronic apparatus. FIG. 1 is a diagram illustrating the outer appearance of the pedometer according to this embodiment. As illustrated in the example, a pedometer 100 includes a display unit 106 on the surface and an operation unit 104 on the side surface. The display unit 106 has a display surface and displays the number of steps on the display surface. The operation unit 104 receives an input from an operator. In this embodiment, it is assumed that the same plane as the display surface of the display unit 106 of the pedometer 100 is an XY plane and a direction perpendicular to the display surface of the display unit 106 is a Z direction. The pedometer 100 is an example of a wristwatch type of pedometer which a user wears on his or her arm for use.

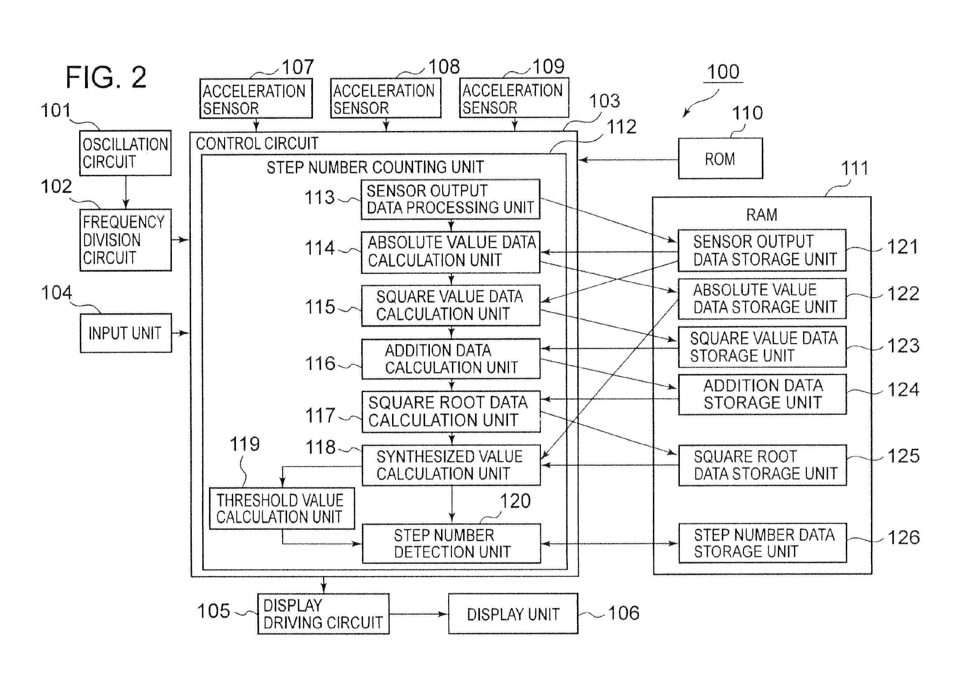

FIG. 2 is a block diagram illustrating the configuration of the pedometer 100 according to this embodiment. As illustrated in the example, the pedometer 100 includes an oscillation circuit 101, a frequency division circuit 102, a control circuit 103, an input unit 104, a display driving circuit 105, a display unit 106, an acceleration sensor 107 (first acceleration sensor), an acceleration sensor 108 (second acceleration sensor), an acceleration sensor 109 (third acceleration sensor), a ROM (Read Only Memory) 110, and a RAM (Random Access Memory) 111. The control circuit 103 includes a step counting unit 112. The step counting unit 112 includes a sensor output data processing unit 113, an absolute value data calculation unit 114, a square value data calculation unit 115, an addition data calculation unit 116, a square root data calculation unit 117, a synthesized value calculation unit 118, a threshold value calculation unit 119, a step number detection unit 120. A plane acceleration calculation unit according to the embodiment of the invention includes, for example, the square value data calculation unit 115, the addition data calculation unit 116, and the square root data calculation unit 117.

The RAM 111 includes a sensor output data storage unit 121, an absolute value data storage unit 122, a square value data storage unit 123, an addition data storage unit 124, a square root data storage unit 125, and a step number data storage unit 126.

The oscillation circuit 101 generates a predetermined frequency signal. The frequency division circuit 102 divides the signal generated by the oscillation circuit 101 to generate a clock signal serving as a reference of time measurement and a reference clock signal for the operation of the control circuit 103. The control circuit 103 is configured by a central processing unit (CPU) and performs processes such as a process of calculating the number of steps, a process of controlling each electronic circuit unit of the pedometer, and a process of measuring a time. The input unit 104 receives an input from a user to give an instruction for starting, stopping, or the like of the pedometer.

The display driving circuit 105 allows the display unit 106 to display the number of steps, a time, or the like in response to the control signal from the control circuit 103. The display unit 106 includes a liquid crystal device (LCD) and displays the number of steps, a time, or the like. The acceleration sensors 107 to 109 detect an X component, a Y component, and a Z component of the orthogonal coordinate axes perpendicular to each other and output acceleration signals with the magnitudes corresponding to the acceleration of the respective components. In this embodiment, the acceleration sensor 107 detects acceleration X in an X axis direction. The acceleration sensor 108 detects an acceleration Y in a Y axis direction. The acceleration sensor 109 detects an acceleration Z in a Z axis direction.

For example, the acceleration sensors 107 to 109 may be configured by a MEMS (Micro Electro Mechanical Systems) tri-axial acceleration sensor or may be configured by three mono-axial acceleration sensors disposed in three axis directions perpendicular to each other.

The ROM 110 stores programs executed by the control circuit 103. The RAM 111 stores data generated during a step number counting process or the like of the step number counting unit 112, the cumulative number of steps, or the like. The sensor output data processing unit 113 acquires the accelerations X, Y, and Z output by the acceleration sensors 107 to 109 at a predetermined period (for example, a 50 ms period) and stores the acquired accelerations X, Y, and Z as acceleration signal data X, Y, Z in the sensor output data storage unit 121, respectively. The absolute value data calculation unit 114 calculates the absolute value of a read value. The square value data calculation unit 115 calculates a square value of the read value. The addition data calculation unit 116 adds the read value. The square root data calculation unit 117 calculates the square root of the read value. The synthesized value calculation unit 118 calculates a synthesized value described below. The threshold value calculation unit 119 calculates a threshold value described below. The step number detection unit 120 detects and counts the number of steps based on the synthesized value.

The sensor output data storage unit 121 stores the acceleration signal data. The absolute data storage unit 122 stores absolute value data. The square value data storage unit 123 stores square value data. The addition data storage unit 124 stores the addition data. The square root data storage unit 125 stores square root data. The step number data storage unit 126 stores the cumulative number of steps.

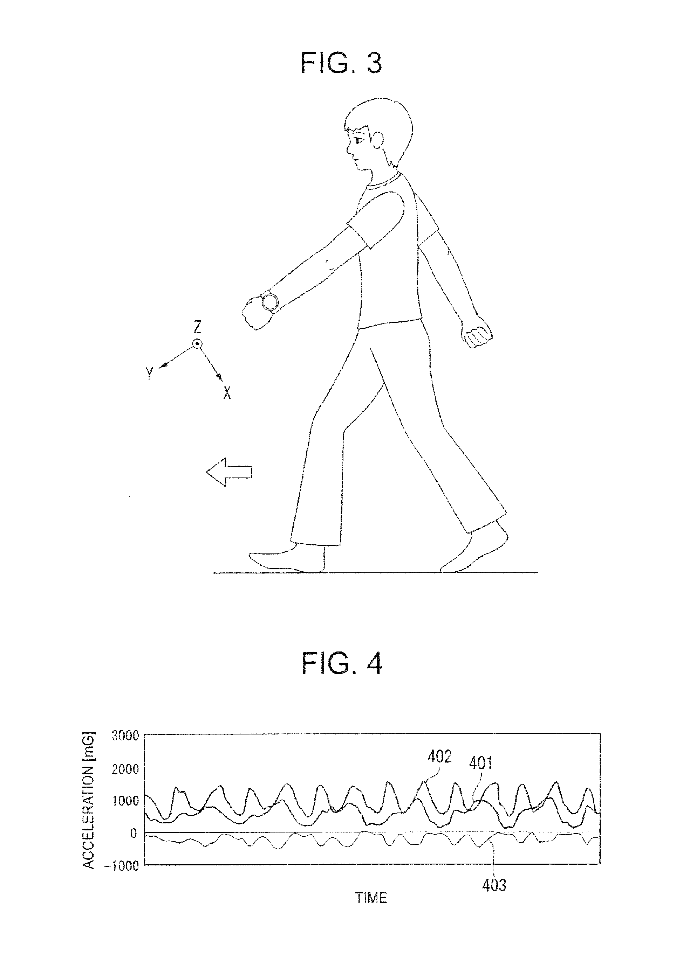

Next, the directions of the accelerations detected when a user wears the pedometer 100 according to this embodiment will be described. FIG. 3 is a schematic diagram illustrating the directions of the accelerations detected by the pedometer 100 when the user is walking as usual. As illustrated in the example, the user wears the pedometer 100 on his or her arm. When the user is walking as usual, the user is waving his or her arms forward and backward. Therefore, as illustrated, the pedometer 100 is considerably moved in the X axis direction and the Y axis direction and is rarely moved in the Z direction.

FIG. 4 is a graph illustrating the magnitude of the accelerations detected in the X, Y, and Z directions by the pedometer 100 when the user is walking as usual. As illustrated in the example, the horizontal axis represents a time and the vertical axis represents the magnitude of acceleration [mG]. A curve 401 indicates the magnitude of the acceleration X in the X axis direction, a curve 402 indicates the magnitude of the acceleration Y in the Y axis direction, and a curve 403 indicates the magnitude of the acceleration Z in the Z axis direction.

As illustrated, when the user is walking as usual, the output of the acceleration X in the X axis direction and the output of the acceleration Y in the Y axis direction increase among the three axes and the output of the acceleration Z in the Z axis direction is rarely obtained. Accordingly, it is necessary to observe the acceleration X in the X axis direction and the acceleration Y in the Y axis direction in order to detect the number of steps when the user is walking as usual.

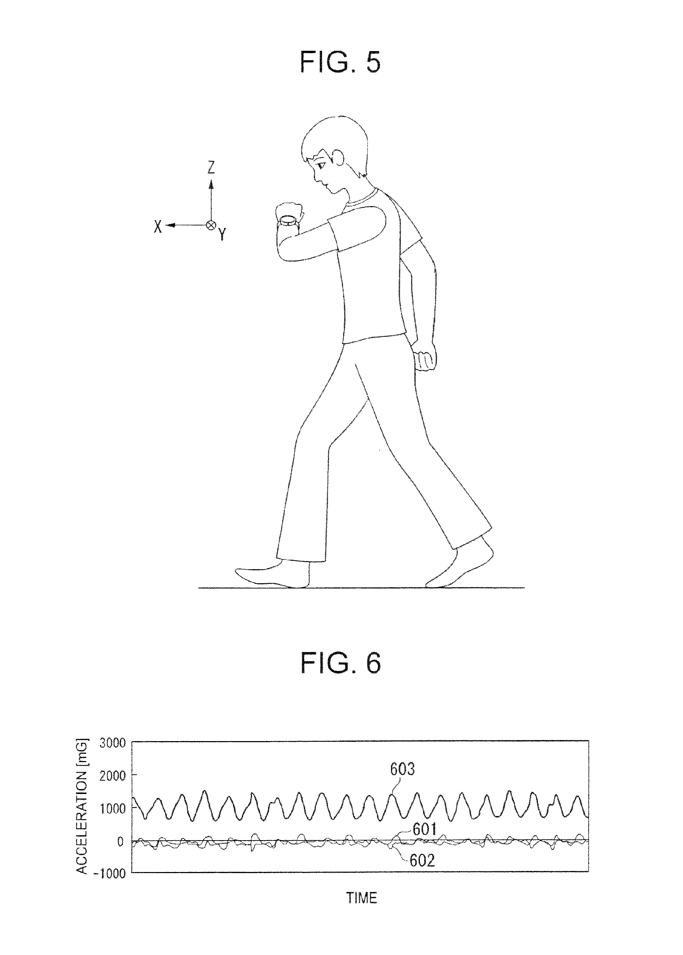

FIG. 5 is a schematic diagram illustrating the directions of the accelerations detected by the pedometer 100 when the user is walking, viewing the display unit 106. As illustrated in the example, the user wears the pedometer 100 on his or her arm. Moreover, the user bends his or her arm to view the display unit 106, when the user is walking, viewing the display unit 106. Therefore, as illustrated, the pedometer 100 is considerably moved in the Z direction and is rarely moved in the X and Y directions.

FIG. 6 is a graph illustrating the magnitudes of the accelerations detected by the pedometer 100 when the user is walking, viewing the display unit 106. As illustrated in the example, the horizontal axis represents a time and the vertical axis represents the magnitude of acceleration [mG]. A curve 601 indicates the magnitude of the acceleration X in the X axis direction, a curve 602 indicates the magnitude of the acceleration Y in the Y axis direction, and a curve 603 indicates the magnitude of the acceleration Z in the Z axis direction.

As illustrated, when the user is walking, viewing the display unit 106, the output of the acceleration Z in the Z axis direction increases among the three axes and the output of the acceleration X in the X axis direction and the output of the acceleration Y in the Y axis direction are rarely obtained. Accordingly, it is necessary to notice the acceleration Z in the Z axis direction in order to detect the number of steps when the user is walking, viewing the display unit 106.

As described above, it is necessary to notice the acceleration X in the X axis direction and the acceleration Y in the Y axis direction in order to detect the number of steps when the user is walking as usual. Moreover, it is necessary to notice the acceleration Z in the Z axis direction in order to detect the number of steps when the user is walking, viewing the display unit 106. Accordingly, it is possible to detect the number of steps with high accuracy in both the two movements by using a value obtained by adding the output values of the acceleration X in the X axis direction and the acceleration Y in the Y axis direction and the output value of the acceleration Z in the Z axis direction.

In this embodiment, the output values of the acceleration X in the X axis direction and the acceleration Y in the Y axis direction are values calculated by Expression (1). Here, X denotes an acceleration signal X output by the acceleration sensor 107 and Y denotes an acceleration signal Y output by the acceleration sensor 108. Moreover, the output value of the acceleration Z in the Z axis direction is the absolute value $|Z|$ of an acceleration signal Z. Therefore, a value used when detecting the number of steps according to this embodiment is a value obtained by adding the values of Expression (1) and the absolute value $|Z|$ of an acceleration signal Z, that is, a value calculated by Expression (2). The value calculated by Expression (2) below is a synthesized value.

$$(X^2+Y^2)^{1/2} \qquad \cdot \cdot \cdot \text{ Expression (1)}$$

$$(X^2+Y^2)^{1/2} +|Z| \quad \cdot \cdot \cdot \text{ Expression (2)}$$

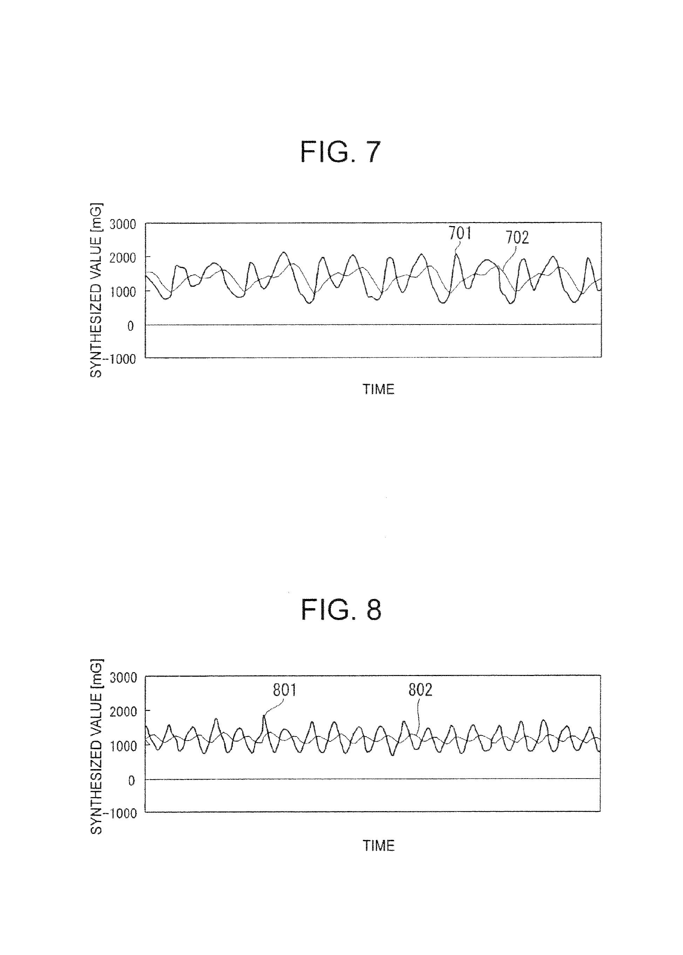

Next, a relationship between the synthesized value and a moving average of the synthesized values will be described. FIG. 7 is a graph illustrating the relationship between the synthesized value and the moving average of the synthesized values when the user is walking as usual. As illustrated in the example, the horizontal axis represents a time and the horizontal axis represents the magnitude of the synthesized value [mG]. A curve 701 indicates the magnitude of the synthesized value and a curve 702 indicates the moving average of the synthesized values.

FIG. 8 is a graph illustrating the relationship between the synthesized value and the moving average of the synthesized values when the user is walking, viewing the display unit 106. As illustrated in the example, the horizontal axis represents a time and the horizontal axis represents the magnitude of the synthesized value [mG]. A curve 801 indicates the magnitude of the synthesized value and a curve 802 indicates the moving average of the synthesized values.

In FIGs. 7 and 8, on the assumption that the moving average of the synthesized values is a threshold value, the synthesized value crosses and passes through the threshold value from the lower side to the upper side (or from the upper side to the lower side) whenever the user wearing the pedometer 100 walks one step. Accordingly, it is possible to count the number of steps which the user walks by detecting and counting the crossed points.

Next, an operation of the pedometer 100 will be described according to this embodiment. When the user wears the pedometer 100 on his or her arm and instructs the pedometer to start the operation by operating the input unit 104, the acceleration sensors 107, 108, and 109 detect the accelerations and output the acceleration signals X, Y, and Z with the levels corresponding to the detected accelerations, respectively.

The sensor output data processing unit 113 of the step number counting unit 112 acquires the acceleration signals X, Y, and Z output by the acceleration sensors 107, 108, and 109 at a predetermined period (for example, a 50 ms period) and stores the acceleration signals X, Y, and Z as the acceleration signal data X, Y, and Z in the sensor output data storage unit 121, respectively. Then, the absolute value data calculation unit 114 reads the acceleration signal data Z stored in the sensor output data storage unit 121, calculates the absolute value $|Z|$ of the acceleration signal data Z, and stores the calculated absolute value data $|Z|$ in the absolute data storage unit 122.

Next, the square value data calculation unit 115 reads the acceleration signal data X and Y stored in the sensor output data storage unit 121, calculates the square value of the acceleration signal data X and the square value of the acceleration signal data Y, and stores the calculated square value data $X^2$ and $Y^2$ in the square value data storage unit 123. Then, the addition data calculation unit 116 reads the square value data $X^2$ and $Y^2$ stored in the square value data storage unit 123, adds the square value data $X^2$ and the square value data $Y^2$, and stores added value data $(X^2+Y^2)$ in the addition data storage unit 124.

Next, the square root data calculation unit 117 reads the addition data stored in the addition data storage unit 124, calculates the square root of the addition data, and stores the calculated square root data (see Expression (1)) in the square root data storage unit 125.

Next, the synthesized value calculation unit 118 reads the square root data (see Expression (1)) stored in the square root data storage unit 125 and the absolute value data $|Z|$ stored in the absolute data storage unit 122, calculates a synthesized value (see Expression (2)) by adding the square root data and the absolute value data $|Z|$, and inputs the calculated synthesized value to the step number detection unit 120 and the threshold value calculation unit 119.

Next, the threshold value calculation unit 119 calculates the threshold value based on the synthesized value (see Expression (2)) and inputs the calculated threshold value to the step number detection unit 120. For example, the threshold value calculation unit 119 calculates the moving average of the synthesized values and sets this moving average as a threshold value. The threshold value may be a value which can be determined in advance.

Next, the step number detection unit 120 counts the number of steps based on the synthesized value input from the synthesized value calculation unit 118 and the threshold value input from the threshold value calculation unit 119. The step number detection unit 120 adds the counted number of steps to the cumulative number of steps stored in the step number data storage unit 126, calculates the new cumulative number of steps, and stores the new cumulative number of steps in the step number data storage unit 126.

For example, when the threshold value is set as the moving average of the synthesized values, the step number detection unit 120 detects the crossed points of the threshold values from the lower side to the upper side (or from the upper side to the lower side) and counts the points as the number of steps.

According to this embodiment, as described above, the result is not used which is obtained as a sum of squares by squaring the detected signals of three acceleration sensors and adding the squared signals in order to detect the number of steps. Instead, the value obtained by adding the output values of the acceleration X in the X axis direction and the acceleration Y in the Y axis direction to the output value of the acceleration Z in the Z axis direction is used in order to detect the number of steps. Therefore, it is possible to reduce the number of bits necessary for calculation to detect the number of steps. According to this embodiment, since the value obtained by adding the output values of the acceleration X in the X axis direction and the acceleration Y in the Y axis direction to the output value of the acceleration Z in the Z axis direction is used in order to detect the number of steps, it is possible to detect the number of steps with high accuracy either when the user is walking as usual or when the user is walking, viewing the display unit 106.

In the above-described example, the value calculated by Expression (2) is used as the synthesized value. However, the value of the acceleration signal Z in the Z axis direction itself may be used as the output value of the acceleration Z in the Z axis direction. In this case, the synthesize value is a value calculated by Expression (3).

$$(X^2+Y^2)^{1/2} +Z \quad \cdot \cdot \cdot \text{ Expression (3)}$$

Since the acceleration signal Z has a positive value and a negative value for the value calculated by Expression (3), the synthesized value also has a positive value and a negative value. However, when the user is walking as usual, the value of the acceleration signal Z is smaller than the values of the acceleration signal X and the acceleration signal Y Therefore, there is no large difference between the synthesized value calculated by Expression (2) and the synthesized value calculated by Expression (3).

When the user is walking, viewing the display unit 106, the value of the acceleration signal Z is much larger than the values of the acceleration signal X and the acceleration signal Y. Therefore, when the value of the acceleration signal Z is negative, the waveform of the synthesized values calculated by Expression (2) and the waveform of the synthesized values calculated by Expression (3) are reversed. Accordingly, when it is desired to avoid the reversing of the waveform of the synthesized values caused due to the positive and negative values of the acceleration signal Z, for example, when it is desired that the synthesized value is normally positive, it is effective to use the synthesized value calculated by Expression (2).

Second Embodiment

Hereinafter, a second embodiment of the invention will be described with reference to the drawings.

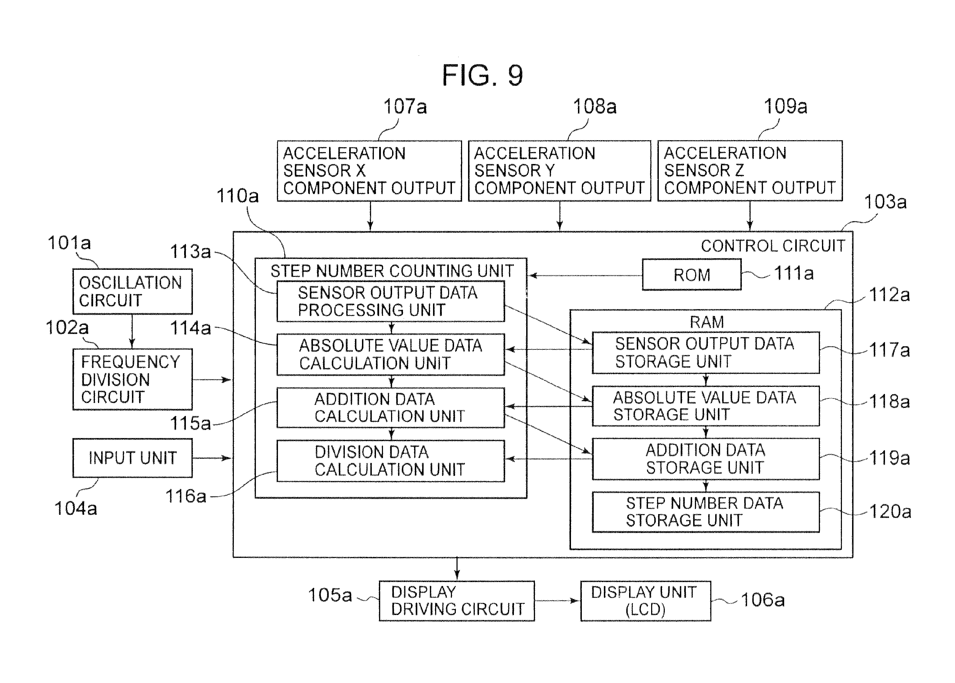

FIG. 9 is a block diagram illustrating a pedometer according to the second embodiment. A portable pedometer is shown which can be carried by directly attaching the portable pedometer to the body such as an arm or putting the pedometer in a bag.

In FIG. 9, the pedometer includes an oscillation circuit 101 a generating a signal with a predetermined frequency, a frequency division circuit 102a dividing the signal generated by the oscillation circuit 101 a and generating a clock signal serving as a reference of time measurement and a reference clock signal for the operation of a control circuit 103a, the control circuit 103a performing processing such as a process of calculating the number of steps, a process of controlling each electronic circuit unit of the pedometer, and a process of measuring a time, and an input unit 104a through which the user gives an instruction, for example, to start and stop the pedometer.

The pedometer further includes a display driving circuit 105a allowing a display unit 106a to display the number of steps, a time, or the like in response to a control signal from the control circuit 103a, the display unit 106a configured by a liquid crystal display (LCD) device and displaying the number of steps, a time, or the like, and acceleration sensors 107a, 108a, and 109a, which are capable of detecting the acceleration of gravity (static acceleration), detecting the accelerations in three-axis directions and outputting acceleration signals X, Y, and Z corresponding to the accelerations in the axis directions, respectively. The acceleration sensors 107a, 108a, and 109a detect X, Y, and Z components of the orthogonal coordinate axes perpendicular to each other and output acceleration signals with the magnitudes corresponding to the accelerations of the respective components.

The acceleration sensors 107a, 108a, and 109a are acceleration sensors capable of detecting acceleration of gravity and can obtain different acceleration signals obtained by applying a bias when the acceleration sensors are placed on the front side and when the acceleration sensors are disposed on the rear side. That is, in the tri-axial acceleration sensor capable of detecting the acceleration of gravity, an operation point can be switched between 1 G and -1G by switching the front and rear sides of the sensor. When the tri-axial acceleration sensor is disposed obliquely, the middle point becomes the operation point and thus the operation point is switched between 1G and -1G. In this embodiment, the reason for using the absolute value is to use the acceleration sensor in which the operation point is varied by switching the front and rear sides of the sensor.

The acceleration sensors 107a to 109a may be configured by a MEMS (Micro Electro Mechanical Systems) tri-axial acceleration sensor or may be configured by three mono-axial acceleration sensors disposed in three axis directions perpendicular to each other.

The control circuit 103a is configured by a central processing unit (CPU). The control circuit 103a includes a step number counting unit 110a performing the process of counting the number of steps based on the acceleration signals from the acceleration sensors 107a to 109a; a read-only memory (ROM) 111a storing a program executed by the central processing unit (CPU) configuring the step number counting unit 110a; and a random access memory (RAM) 112a storing data generated during the step number counting process or the like performed by the step number counting unit 110a, the number of steps, or the like.

The step number counting unit 110a includes a sensor output data processing unit 113a storing the acceleration signals X, Y, and Z from the acceleration sensors 107a to 109a as acceleration signal data in a sensor output data storage unit 117a of the RAM 112a; an absolute value data calculation unit 114a calculating the absolute values |X|, |Y|, and |Z| of the acceleration signal data X, Y, and Z stored in the sensor output data storage unit 117a and the absolute values of the products |XY|, |YZ|, and |ZX| between the acceleration signal data X, Y, and Z and storing the absolute values |X|, |Y|, and |Z| and the absolute values of the products |XY|, |YZ|, and |ZX| as absolute value data in the absolute value data storage unit 118a; an addition data calculation unit 115a calculating the product sum (|XY|+|YZ|+|ZX|) between the absolute value data stored in the absolute value data storage unit 118a and the sum (|X|+|Y|+|Z|) of the respective absolute value data and storing the product sum (|XY|+|YZ|+|ZX|) of the absolute value data and the sum (|X|+|Y|+|Z|) of the respective absolute value data in an addition data storage unit 119a; and a division data calculation unit 116a calculating a step number signal S by dividing the product sum (|XY|+|YZ|+|ZX|) of the absolute value data stored in the addition data storage unit 119a by the sum (|X|+|Y|+|Z|) of the respective absolute value data. Thus, the step number signal S can be obtained by S=(|XY|+|YZ|+|ZX|)/(|X|+|Y|+|Z|).

The RAM 112a includes the sensor output data storage unit 117a storing the acceleration signal data X, Y, and Z from the sensor output data processing unit 113a; the absolute value data storage unit 118a storing the absolute value data |X|, |Y|, |Z|, |XY|, |YZ|, and |ZX| calculated by the absolute data calculation unit 114a; the addition data storage unit 119a storing the sum (|X|+|Y|+|Z|) and the product sum (|XY|+|YZ|+|ZX|) of the absolute value data calculated by the addition data calculation unit 115a; and a step number data storage unit 120a frequently storing the cumulative number of steps counted using the division data calculated by the division data calculation unit 116a by the step number counting unit 110a.

Here, the acceleration sensors 107a to 109a form acceleration sensor means, the step number counting unit 110a forms step number calculation means, and the control circuit 103a forms control means. The sensor output data processing unit 113a, the absolute value data calculation unit 114a, the addition data calculation unit 115a, and the division data calculation unit 116a are configured as a step number signal calculation means. Moreover, the sensor output data storage unit 117a forms sensor output data storage means, the absolute value data storage unit 118a forms absolute value data storage means, the addition data storage unit 119a forms an addition data storage means, and the step number data storage unit 120a forms step number data storage means.

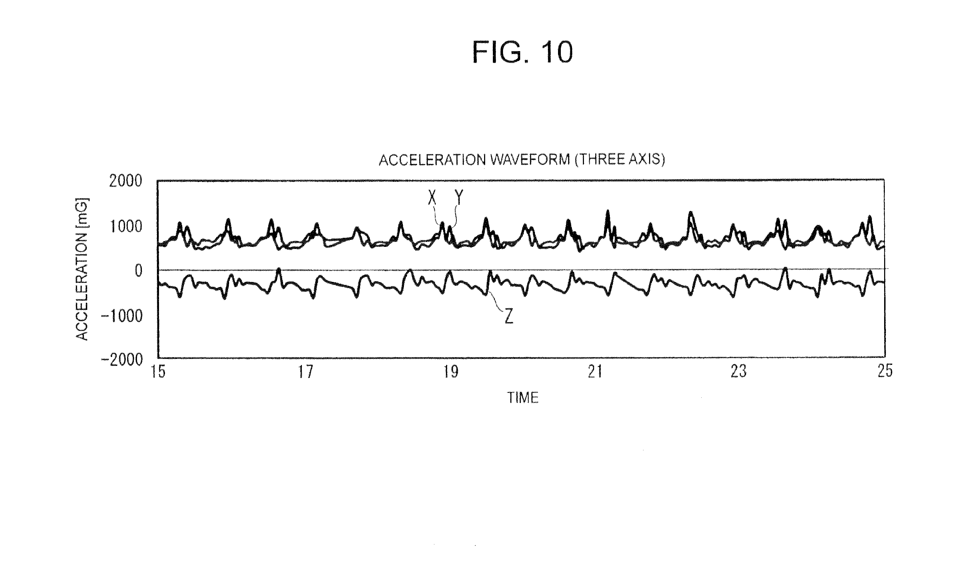

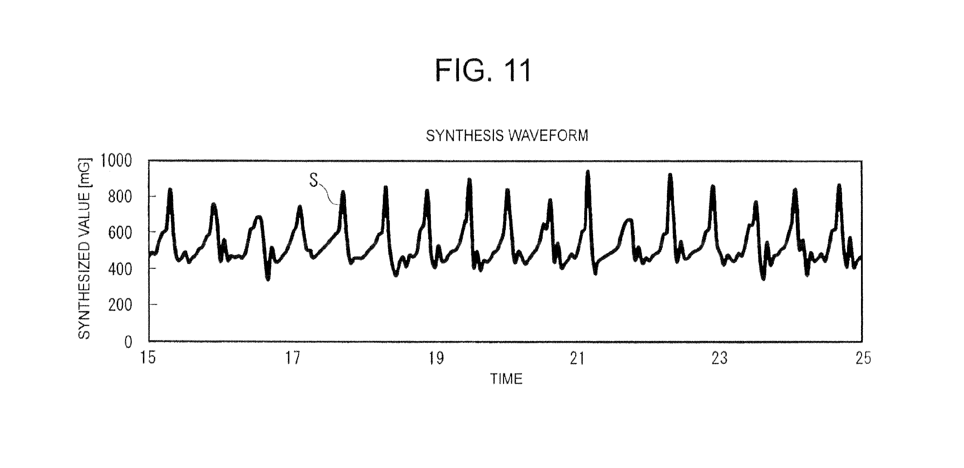

FIGs. 10 and 11 are diagrams for describing the operation according to this embodiment.

In FIG. 10, the horizontal axis represents a time and the vertical axis represents the levels (acceleration) of the acceleration signals X, Y, and Z obtained from the acceleration sensors 107a, 108a, and 109a, respectively. A positive bias is applied to the acceleration sensors 107a and 108a, and thus the acceleration signal X obtained from the acceleration sensor 107a and the acceleration signal Y obtained from the acceleration sensor 108a are shifted by a slight amount toward the positive side. On the other hand, a negative bias is applied to the acceleration sensor 109a, and thus the acceleration signal Z obtained from the acceleration sensor 109a is shifted by a slight amount toward the negative side.

Since the acceleration signals X, Y, and Z obtained from the acceleration sensors 107a, 108a, and 109a, respectively, have a mountain-shaped level corresponding to a step in which S/N of the acceleration signal is bad, a clear mountain shape indicating a step is not obtained.

In FIG. 11, the horizontal axis represents a time and the vertical axis represents the waveform of the step number signal S (|XY|+|YZ|+|ZX|)/(|X|+|Y|+|Z|). The unit of the vertical axis is the same unit as that of the acceleration. Since the S/N of the step number signal S is improved, a clearer mountain shape can be obtained at the position corresponding to each step compared to the waveform shown in FIG. 10.

Hereinafter, an operation of the pedometer according to this embodiment will be described with reference to FIGs. 9 to 11.

When a user carrying the pedometer according to this embodiment operates the input unit 104a and gives an instruction to start step number measurement, the acceleration sensors 107a, 108a, and 109a detects the accelerations. As shown in FIG. 10, the acceleration signals X, Y, and Z with the levels corresponding to the detected accelerations are output.

The sensor output data processing unit 113a of the step number counting unit 110a stores the acceleration signals X, Y, and Z as the acceleration signal data X, Y, and Z at a predetermined period in the sensor output data storage unit 117a of the RAM 112a. Next, the absolute value data calculation unit 114a reads the acceleration signal data X, Y, and Z stored in the sensor output data storage unit 117a, calculates the absolute values |X|, |Y|, and |Z| of the acceleration signal data X, Y, and Z and the absolute values |XY|, |YZ|, and |ZX| of the products between the acceleration signal data X, Y, and Z, and stores the absolute values |X|, |Y|, and |Z| and the absolute values |XY|, |YZ|, and |ZX| as the absolute value data in the absolute data storage unit 118a.

Next, the addition data calculation unit 115a reads the absolute values |X|, |Y|, and |Z| and the absolute values |XY|, |YZ|, and |ZX| stored in the absolute data storage unit 118a, calculates the product sum (|XY|+|YZ|+|ZX|) between the absolute value data and the sum (|X|+|Y|+|Z|) of the absolute value data, and stores the product sum (|XY|+|YZ|+|ZX|) and the sum (|X|+|Y|+|Z|) in the addition data storage unit 119a.

Next, the division data calculation unit 116a calculates the step number signal S by dividing the product sum (|XY|+|YZ|+|ZX|) between the absolute value data stored in the addition data storage unit 119a by the sum (|X|+|Y|+|Z|) of the absolute values.

The step number counting unit 110a calculates the new cumulative number of steps by counting the step number signal S satisfying a predetermined determination reference as one step and adding the one step to the cumulative number of steps stored in the step number data storage unit 120a, and then stores the new cumulative number of steps in the step number data storage unit 120a. For example, by using a reference level used to determine the level of the step number signal S as the predetermined determination reference, the step number signal S exceeding the reference level is added as one step.

The obtained step number signal S becomes a signal with the waveform shown in FIG. 11 and each mountain shape of the waveform indicates one step. It can be understood that the mountain shapes indicating the step become clear compared to the acceleration signals X, Y, and Z shown in FIG. 10 and thus the S/N of the step number signal S is improved. Thus, it is possible to measure the number of steps with high accuracy by improving the S/N of the step number signal S.

In particular, the process of calculating the step number signal S includes addition calculation, product sum calculation, and division calculation and the step number signal S can be calculated without performing squaring. Therefore, the calculated value of the step number signal S is not increased and the calculation process can be realized in a short time using a slow-speed CPU or a small capacity memory. Moreover, the number of steps can be detected even in a microcomputer with a small-capacity RAM or a system with a low processing capability.

Since the absolute values of the acceleration signals are used in the process of calculating the step number signal S, it is possible to use an acceleration sensor in which an operation point is varied by switching the front and rear sides of the sensor. Moreover, by using the sum of the absolute values of the acceleration signals in the denominator of the step number signal S, the acceleration signals can be normalized and the values of the calculated step number signals can be unified within a given range. Moreover, the dimension of the acceleration signal S can be realized in the dimension of the acceleration. Moreover, since the denominator of the step number signal S is calculated by the product sum of the absolute values of the acceleration signals, it is possible to widely detect the vibration in all directions.

The control circuit 103a controls the display driving circuit 105a so as to display the cumulative number of steps stored in the step number data storage unit 120a on the display unit 106a. Thus, the current cumulative number of steps is displayed on the display unit 106a.

As described above, the pedometer according to this embodiment detects the accelerations in the three-axis directions perpendicular to each other. The pedometer includes the acceleration sensors 107a to 109a outputting the acceleration signals X, Y, and Z corresponding to the accelerations in the respective axis directions; the sensor output data processing unit 113a calculating the step number signal S using the acceleration signals X, Y, and Z by the following expression; the absolute value data calculation unit 114a; the addition data calculation unit 115a; the division data calculation unit 116a; and the step number counting unit 110a counting the step number signal S satisfying the predetermined determination reference as the number of steps.

$$S=(|XY|+|YZ|+|ZX|)/(|X|+|Y|+|Z|)$$

Accordingly, the process of calculating the step number signal S includes the addition calculation, the product sum calculation, and the division calculation and the step number signal S can be calculated without performing squaring. Therefore, the calculated value of the step number signal S is not increased and the calculation process can be realized quickly using a slow-speed CPU or a small capacity memory. Moreover, it is possible to prevent the increase in the number of bits necessary for the calculation.

It is possible to measure the number of steps with high accuracy by improving the S/N of the step number signal using the signals corresponding to the plurality of accelerations.

Since the acceleration sensors used to measure the number of steps is not limited to only one of the acceleration sensors, it is possible to measure the number of steps with high accuracy.

Third Embodiment

Hereinafter, a third embodiment of the invention will be described with reference to the drawings.

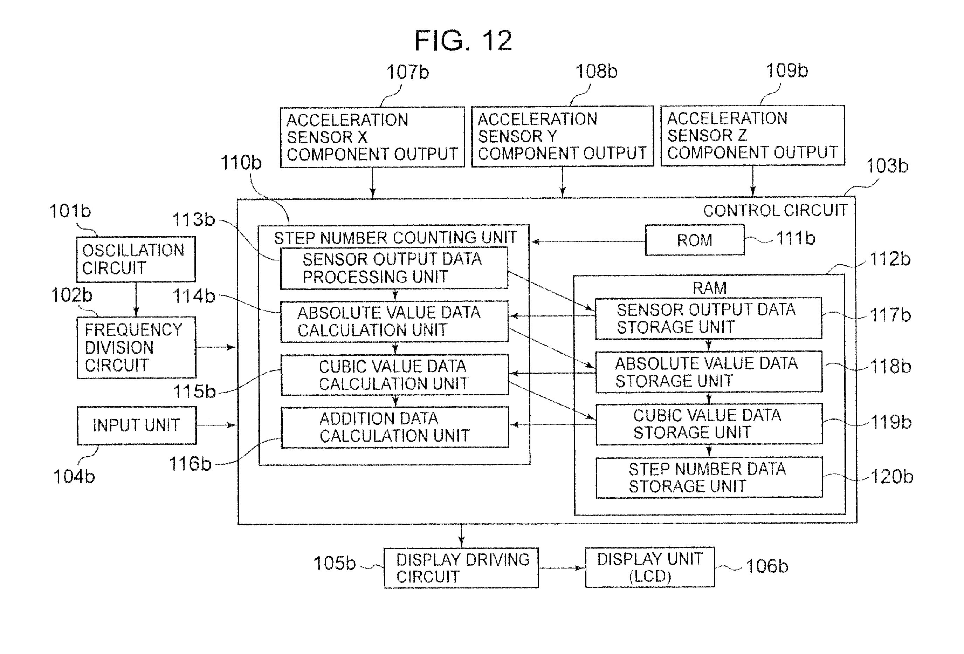

FIG. 12 is a block diagram illustrating a pedometer according to the third embodiment. A portable pedometer is shown which can be carried by directly attaching the portable pedometer to the body such as an arm or putting the pedometer in a bag.

In FIG. 12, the pedometer includes an oscillation circuit 101 b generating a signal with a predetermined frequency, a frequency division circuit 102b dividing the signal generated by the oscillation circuit 101b and generating a clock signal serving as a reference of time measurement and a reference clock signal for the operation of a control circuit 103b, the control circuit 103b performing processing such as a process of calculating the number of steps, a process of controlling each electronic circuit unit of the pedometer, and a process of measuring a time, and an input unit 104b through which the user gives an instruction, for example, to start and stop the pedometer.

The pedometer further includes a display driving circuit 105b allowing a display unit 106b to display the number of steps, a time, or the like in response to a control signal from the control circuit 103b, the display unit 106b configured by a liquid crystal display (LCD) device and displaying the number of steps, a time, or the like, and acceleration sensors 107b, 108b, and 109b, which are capable of detecting the acceleration of gravity, detecting the accelerations in three-axis directions and outputting acceleration signals X, Y, and Z corresponding to the accelerations in the axis directions, respectively. The acceleration sensors 107b, 108b, and 109b detect X, Y, and Z components of the orthogonal coordinate axes perpendicular to each other and output acceleration signals with the magnitudes corresponding to the accelerations of the respective components.

The acceleration sensors 107b, 108b, and 109b are acceleration sensors capable of detecting acceleration of gravity (static acceleration) and can obtain different acceleration signals obtained by applying a bias when the acceleration sensors are placed on the front side and when the acceleration sensors are disposed on the rear side. That is, the tri-axial acceleration sensor capable of detecting the acceleration of gravity, an operation point can be switched between 1 G and -1 G by switching the front and rear sides of the sensor. When the tri-axial acceleration sensor is disposed obliquely, the middle point becomes the operation point and thus the operation point is switched between 1G and -1G. In this embodiment, the reason for using the absolute value is to use the acceleration sensor in which the operation point is varied by switching the front and rear sides of the sensor.

The acceleration sensors 107b to 109b may be configured by a MEMS (Micro Electro Mechanical Systems) tri-axial acceleration sensor or may be configured by three mono-axial acceleration sensors disposed in three axis directions perpendicular to each other.

The control circuit 103b is configured by a central processing unit (CPU). The control circuit 103b includes a step number counting unit 110b performing the process of counting the number of steps based on the acceleration signals from the acceleration sensors 107b to 109b; a read-only memory (ROM) 111b storing a program executed by the central processing unit (CPU) configuring the step number counting unit 110b; and a random access memory (RAM) 112b storing data generated during the step number counting process or the like performed by the step number counting unit 110b, the number of steps, or the like.

The step number counting unit 110b includes a sensor output data processing unit 113b storing the acceleration signals X, Y, and Z from the acceleration sensors 107b to 109b as sensor output data X, Y, and Z in a sensor output data storage unit 117b of the RAM 112b; an absolute value data calculation unit 114b calculating the absolute values of the sensor output data X, Y, and Z stored in the sensor output data storage unit 117b and storing the sensor output data X, Y, and Z as the absolute value data $|X|$, $|Y|$, and in the absolute value data storage unit 118b; a cubic value data calculation unit 115b calculating cubic values of absolute value data $|X|$, $|Y|$, and $|Z|$ stored in the absolute value data storage unit 118b and storing the cubic values of absolute value data $|X|$, $|Y|$, and $|Z|$ as cubic value data $|X|^3$, $|Y|^3$, and $|Z|^3$ in a cubic value data storage unit 119b; and an addition data calculation unit 116b calculating a step number signal S by adding the cubic value data $|X|^3$, $|Y|^3$, and $|Z|^3$ stored in the cubic value data storage unit 119b. Thus, the step number signal S can be obtained by $S=(|X|^3+|Y|^3+|Z|^3)$.

The RAM 112b includes the sensor output data storage unit 117b storing the sensor output data X, Y, and Z from the sensor output data processing unit 113b; the absolute value data storage unit 118b storing the absolute value data $|X|$, $|Y|$, and $|Z|$ calculated by the absolute data calculation unit 114b; the cubic value data storage unit 119b storing the cubic value data $|X|^3$, $|Y|^3$, and $|Z|^3$ calculated by the cubic value data calculation unit 115b; and a step number data storage unit 120b frequently storing the cumulative number of steps counted by the step number counting unit 110b.

Here, the acceleration sensors 107b to 109b form acceleration sensor means, the step number counting unit 110b forms step number calculation means, and the control circuit 103b forms control means. The sensor output data processing unit 113b, the absolute value data calculation unit 114b, the cubic value data calculation unit 115b, and the addition data calculation unit 116b are configured as a step number signal calculation means. Moreover, the sensor output data storage unit 117b forms sensor output data storage means, the absolute value data storage unit 118b forms absolute value data storage means, the cubic value data storage unit 119b forms cubic value data storage means, and the step number data storage unit 120b forms step number data storage means.

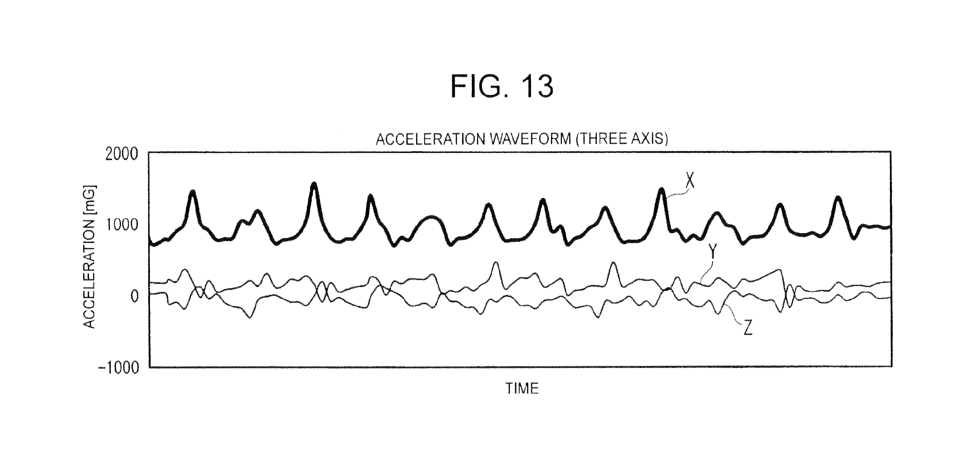

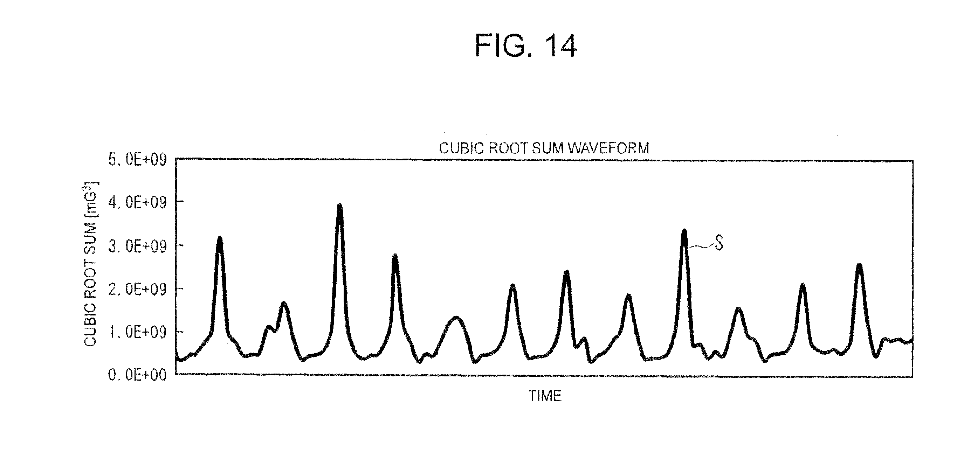

FIGs. 13 and 14 are diagrams for describing the operation according to this embodiment.

In FIG. 13, the horizontal axis represents a time and the vertical axis represents the levels (acceleration) of the acceleration signals X, Y, and Z obtained from the acceleration sensors 107b, 108b, and 109b, respectively. A mountain shape is clearly formed at the position corresponding to each step in the acceleration signal X obtained from the acceleration sensor 107b, whereas the mountain shape corresponding to each step is not clear and is buried in noise in the acceleration signals Y and Z obtained by the acceleration sensors 108b and 109b, respectively.

In FIG. 14, the horizontal axis represents a time and the vertical axis represents the waveform of the step number signal S which is a cubic value ($|X|^3+|Y|^3+|Z|^3$) of the absolute value data $|X|$, $|Y|$, and $|Z|$ based on the acceleration signals X, Y, and Z obtained by the acceleration sensors 107b to 109b. Since the S/N of the step number signal S is improved, a clearer mountain shape can be obtained at the position corresponding to each step.

Hereinafter, an operation of the pedometer according to this embodiment will be described with reference to FIGs. 12 to 14.

When a user carrying the pedometer according to this embodiment operates the input unit 104b and gives an instruction to start step number measurement, the acceleration sensors 107b, 108b, and 109b detect the accelerations. As shown in FIG. 13, the acceleration signals X, Y, and Z with the levels corresponding to the detected accelerations are output.

The sensor output data processing unit 113b of the step number counting unit 110b stores the acceleration signals X, Y, and Z as the sensor output data X, Y, and Z at a predetermined period in the sensor output data storage unit 117b of the RAM 112b. Next, the absolute value data calculation unit 114b reads the sensor output data X, Y, and Z stored in the sensor output data storage unit 117b, calculates the absolute values of the acceleration signal data X, Y, and Z, obtains the absolute value data $|X|$, $|Y|$, and $|Z|$ and stores the absolute values $|X|$, $|Y|$, and $|Z|$ in the absolute data storage unit 118b.

Next, the cubic value data calculation unit 115b reads the absolute values $|X|$, $|Y|$, and $|Z|$ stored in the absolute data storage unit 118b, obtains the cubic value data $|X|^3$, $|Y|^3$, and $|Z|^3$, and stores the cubic value data $|X|^3$, $|Y|^3$, and $|Z|^3$ in the cubic value data storage unit 119b. Next, the addition data calculation unit 116b reads and adds the cubic value data $|X|^3$, $|Y|^3$, and $|Z|^3$ stored in the cubic value data storage unit 119b and the step number signal S expressed by the following expression.

$$S=|X|^3+|Y|^3+|Z|^3$$

The step number signal S becomes a signal with the waveform shown in FIG. 14 and each mountain shape of the waveform indicates one step. It can be understood that the mountain shapes indicating the step become clearer compared to the acceleration signals X, Y, and Z shown in FIG. 13 and thus the S/N of the step number signal S is improved. Thus, it is possible to measure the number of steps with high accuracy by improving the S/N of the step number signal S.

The step number counting unit 110b calculates the new cumulative number of steps by counting the step number signal S satisfying a predetermined determination reference as one step and adding the one step to the cumulative number of steps stored in the step number data storage unit 120b, and then stores the new cumulative number of steps in the step number data storage unit 120b.

For example, by using a reference level, to compare with the level of the step number signal S as the predetermined determination reference, the step number signal S exceeding the reference level is added as one step.

The control circuit 103b controls the display driving circuit 105b so as to display the number of steps stored in the step number data storage unit 120b on the display unit 106b. Thus, the current cumulative number of steps is displayed on the display unit 106b.

In this embodiment, the 3rd power has been used, but an integer equal to or larger than 3 can be used as the number of power. In this case, the step number signal S is expressed as $S=|X|^n+|Y|^n+|Z|^n$, where n is an integer equal to or larger than 3.

In this case, a plurality of integers n equal to or larger than 3 may be prepared as the integer n in advance in the ROM 111b. The step number counting unit 110b may change the integer n and calculate the step number signal S so that the S/N is equal to or larger than a predetermined value in accordance with the level of the mountain shape or the period of the mountain shape of the step number signal S. Thus, the S/N is improved depending on the walking situation by selecting the appropriate integer n depending on the walking situation, and thus the number of steps can be measured with high accuracy.

As described above, the pedometer according to this embodiment includes the acceleration sensors 107b to 109b detecting the accelerations in the three-axis accelerations perpendicular to each other and outputting the acceleration signals X, Y, and Z corresponding to the accelerations in the axis directions, respectively; the sensor output data processing unit 113b calculating the step number signal S using the acceleration signals X, Y, and Z by the following expression; the absolute value data calculation unit 114b; the cubic value data calculation unit 115b; the addition data calculation unit 116b; and the step number counting unit 110b counting the step number signal S satisfying the predetermined determination reference as the number of steps.

$S=(|X|^n+|Y|^n+|Z|^n)$, where n is an integer equal to or larger than 3.

Thus, the number of steps can be measured with high accuracy by improving the S/N of the step number signal using the signals corresponding to the plurality of accelerations.

Moreover, since the number n of power is equal to or larger than 3, a difference between the signal component indicating step and noise component indicating no step is increased. Therefore, the S/N of the step number signal is improved and thus the step detection accuracy is improved.

Since the acceleration sensors used to measure the number of steps is not limited to only one of the acceleration sensors, it is possible to measure the number of steps with high accuracy.

Moreover, since it is possible to obtain the waveform weighted sequentially from the sensor output data of the output axis close to the direction of the acceleration of gravity effective in the step number detection by calculating the n power-of-sum (where n is an integer equal to or larger than 3) of the signals from the respective acceleration sensors, the advantage of detecting the number of steps with high accuracy can be obtained.

Fourth Embodiment

Hereinafter, a fourth embodiment of the invention will be described with reference to the drawings.

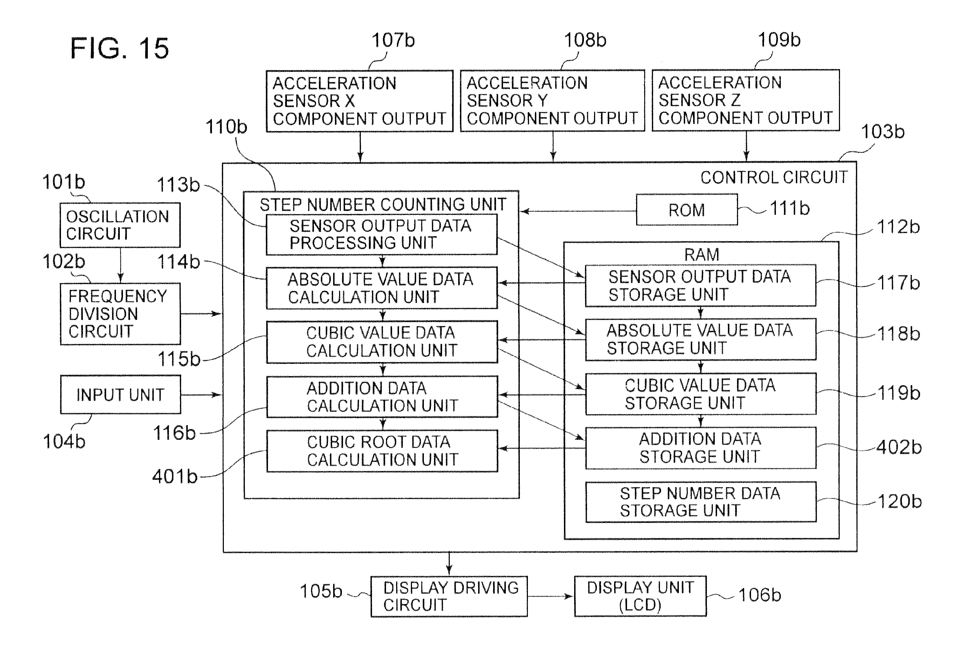

FIG. 15 is a block diagram illustrating a pedometer according to the fourth embodiment. The same reference numerals are given to the same constituent elements as those shown in FIG. 12.

This embodiment is different from the third embodiment in that the step number counting unit 110b further includes a cubic root data calculation unit 401 b, the RAM 112b further includes an addition data storage unit 402b, and the step number signal S is calculated by $S=(|X|^n+|Y|^n+|Z|^n)^{1/n}$. Thus, it is possible to convert the step number signal S in a unit of acceleration and determine the level of the step number signal S.

Hereinafter, differences of the pedometer according to this embodiment from that according to the third embodiment will be described.

Here, the acceleration sensors 107b to 109b form acceleration sensor means, the step number counting unit 110b forms step number calculation means, and the control circuit 103b forms control means. The sensor output data processing unit 113b, the absolute value data calculation unit 114b, the cubic value data calculation unit 115b, the addition data calculation unit 116b, and the cubic root data calculation unit 401b are configured as a step number signal calculation means. Moreover, the sensor output data storage unit 117b forms sensor output data storage means, the absolute value data storage unit 118b forms absolute value data storage means, the cubic value data storage unit 119b forms cubic value data storage means, the addition data storage unit 402b is configured as the addition data storage means, and the step number data storage unit 120b forms step number data storage means.

In FIG. 15, the addition data calculation unit 116b obtains a cubic sum $(|X|^3+|Y|^3+|Z|^3)$ as addition data by adding the cubic value data $|X|^3$, $|Y|^3$, and $|Z|^3$ stored in the cubic value data storage unit and stores the addition data $(|X|^3+|Y|^3+|Z|^3)$ in the addition data storage unit 402b. Next, the cubic root data calculation unit 401 b reads the addition data $(|X|^3+|Y|^3+|Z|^3)$ from the addition data storage unit 402b, calculates the cubic root of the addition data, and calculates the stem number signal S expressed as the following expression.

$$S=(|X|^3+|Y|^3+|Z|^3)^{1/3}$$

In this embodiment, it is possible also to measure the number of steps with high accuracy by improving the S/N of the step number signal S.

In this embodiment, the step number signal S has been calculated by calculating the cubic sum of the absolute data and the cubic root of the cubic sum. As shown in the following expression, however, the stem number signal S may be calculated by calculating n-th power sum of the absolute data and an m-th power root of the n-th power sum.

$S=(|X|^n+|Y|^n+|Z|^n)^{1/m}$, where n and m are the same integer or different integers equal to or larger than 3.

In this embodiment, a plurality of integers m and n equal to or larger than 3 may be stored as integers m and n in advance in the ROM 111 b and the step number counting unit 110b may calculate the step number signal S by changing the integers m and n according to the level of the mountain shape or the period of the mountain shape of the step number signal S. Thus, by selecting appropriate integers m and n depending on the walking situation, it is possible to improve the S/N depending on the walking situation and measure the number of steps with high accuracy.

The invention is not limited to the above-described embodiments, but may be modified in various forms within the scope of the invention without departing from the scope of the invention. In this embodiment, for example, the wristwatch type of pedometer shown in FIG. 1 has been used as an example of an electronic apparatus. However, the invention is not limited thereto. Instead, the pedometer may be installed in various types of electronic apparatuses such as a portable apparatus such as a cellular phone.

In the above-described embodiments, the pedometer calculates the magnitude of acceleration in at least one of the three separate directions and calculates the synthesized value of the accelerations based on the acceleration in the direction separate from at least one direction.

In the first embodiment, for example, the pedometer calculates the magnitudes (Expression (1)) of accelerations in two directions among the three directions perpendicular to each other and calculates the synthesized value (Expression (2) or (3)) of the accelerations based on the calculated magnitudes of accelerations and the acceleration (the absolute value |Z| or acceleration signal Z) in the direction perpendicular to the two directions. In the second and third embodiments, for example, the pedometer calculates the magnitude (the absolute data |X|, |Y|, or |Z|) of acceleration in at least one direction among the three separate directions and calculates the synthesized value of the accelerations based on the calculated magnitude of acceleration and the acceleration (the absolute data |X|, |Y|, or |Z|) in the direction separate from the one direction.

Thus, according to the above-described embodiments, the pedometer can detect the number of steps.

In the above-described first embodiment, the pedometer may multiply one or both of Expression (1) and the absolute value |Z|, or the acceleration signal Z by an integer and then add them, and may set the addition value as the synthesized value (for example, $S=a\times(\sqrt(X^2+Y^2))+b\times Z$, where a and b are but need not be an integer).

In the above-described embodiments, the detection directions of the accelerations are three-axis directions, but the invention is not limited thereto. Instead, the directions may be separated (linearly separate) from each other. For example, in the pedometer, the detection directions of the accelerations may not be precisely perpendicular to each other. In the above-described embodiments, the term "perpendicular" has been used as the term "precisely perpendicular", but may include a slightly deviated angle (for example, an angle may be deviated by several degrees from 90 degrees).

In the above-described embodiments, a part of the pedometer may be realized by a computer. In this case, a program realizing the control function may be recorded in a computer-readable recording medium and the program recorded in the recording medium may be read and executed in a computer system. Here, the "computer system" is a computer system embedded in the pedometer and includes an OS or hardware such as a peripheral apparatus. The "computer-readable recording medium" is a portable medium such as a flexible disk, a magneto-optical disk, a ROM, or a CD-ROM and a storage device such as a hard disk installed in a computer system. The "computer-readable recording medium" may include a communication line, such as a communication line transmitting a program via a network such as the Internet or a telephone line, maintaining a program dynamically in a short time and a memory, such as a non-volatile memory of a computer system serving as a server or a client, maintaining a program for a given time. The program may be a program realizing a part of the above-described functions or may be realized by a combination with a program recorded in advance in a computer system.

A part or the whole of the pedometer according to the above-described embodiments may be realized by an integrated circuit such as LSI (Large Scale Integration). The respective function blocks of the pedometer may be separately processed, or a part or the whole of the function blocks may be integrated and processed. The integrating and processing method is not limited to LSI, but may be realized by a dedicated circuit or a general processor. When an improved integrated circuit technique substituting LSI is developed by advance in a semiconductor technology, an integrated circuit manufactured by the technique may be used.

The invention is applicable to various types of portable pedometers such as a single pedometer or a pedometer built in a portable apparatus such as a cellular phone.

Although neither the threshold calculation unit 119 nor the step number detecting unit 120 of the first embodiment have been explicitly described in the later embodiments, it should be understood that one or both (or other units adapted to calculate the number of steps based on the step number signal S) may be included in the later embodiments.

**Claims**

1. An electronic apparatus (100) comprising:

   a calculation unit (103) arranged to calculate a magnitude of an acceleration in at least one of three separate directions and to calculate a synthesized value indicating the magnitudes of the accelerations in the three directions based on the calculated magnitude of the acceleration and the acceleration in the direction separate from at least one of the directions.

2. An electronic apparatus according to claim 1, further comprising:

a first acceleration sensor (107) arranged to detect the acceleration in a first direction and output a first signal corresponding to this acceleration;

a second acceleration sensor (108) arranged to detect the acceleration in a second direction perpendicular to the first direction and output a second signal corresponding to this acceleration; and

a third acceleration sensor (109) arranged to detect the acceleration in a third direction perpendicular to a plane uniquely specified by the first and second directions and output a third signal corresponding to this acceleration, wherein the calculation unit includes

a plane acceleration calculation unit (115, 116, 117) arranged to calculate a value indicating the magnitude of the acceleration on the plane uniquely specified by the first and second directions based on the first and second signals, and

a synthesized value computation unit (118) arranged to calculate the synthesized value based on the value indicating the magnitude of the acceleration on the plane and the third signal.

3. An electronic apparatus according to claim 2, further comprising:

a display unit (106) arranged to display information on a display surface,
wherein the plane uniquely specified by the first and second directions is parallel to the display surface of the display unit.

4. An electronic apparatus according to claim 1, wherein the calculation unit is arranged to calculate the synthesized value so that a ratio of a signal to noise is higher compared to the synthesized value indicating the magnitudes of the accelerations in the three directions.

5. An electronic apparatus according to claim 4, further comprising:

an acceleration sensor (107a, 108a, 109a) arranged to detect accelerations in three-axis directions perpendicular to each other and output acceleration signals X, Y, and Z corresponding to the accelerations in the axis directions, respectively,
wherein the calculation unit (103a) arranged to calculate the synthesized value S using the acceleration signals X, Y, and Z by an expression

$$S = (|XY| + |YZ| + |ZX|)/(|X| + |Y| + |Z|).$$

6. An electronic apparatus according to claim 5, wherein the calculation unit includes
an absolute value data calculation unit (114a) arranged to calculate absolute values of the acceleration signals X, Y, and Z and absolute values of products XY, YZ, and ZX between the acceleration signals X, Y, and Z and store the absolute values as absolute value data in an absolute data storage unit (118a),
an addition data calculation unit (115a) arranged to calculate a product sum ($|XY| + |YZ| + |ZX|$) and a sum ($|X| + |Y| + |Z|$) of the absolute value data stored in the absolute value data storage unit and store the product sum and the sum in an addition data storage unit (119a), and
a division data calculation unit (116a) arranged to calculate the synthesized value S by dividing the product sum ($|XY| + |YZ| + |ZX|$) stored in the addition data storage unit by the sum ($|X| + |Y| + |Z|$).

7. An electronic apparatus according to claim 4, further comprising:

an acceleration sensor (107b, 108b, 109b) arranged to detect accelerations in three-axis directions perpendicular to each other and outputting acceleration signals X, Y, and Z corresponding to the accelerations in the axis directions, respectively,
wherein the calculation unit (103b) arranged to calculate the synthesized value S using the acceleration signals X, Y, and Z by an expression
$S = (|X|^n + |Y|^n + |Z|^n)$, where n is an integer equal to or larger than 3.

8. An electronic apparatus according to claim 7, wherein the calculation unit includes
an absolute value data calculation unit (114b) arranged to calculate absolute values of the acceleration signals X, Y, and Z and store the absolute values as absolute value data in an absolute value data storage unit (118b),

an n-th power value data calculation unit (115b) arranged to calculate n-th power values of the respective absolute value data stored in the absolute value data storage unit and store the n-th power values as n-th power value data in an n-th power value data storage unit (119b), and

an addition data calculation unit (116b) arranged to calculate the synthesized value S by adding the respective n-th power value data stored in the n-th power value storage unit.

9. An electronic apparatus according to claim 7 or 8, wherein a plurality of the integers n equal to or larger than 3 is prepared and the calculation unit calculates the synthesized value S by changing the integer n according to a level or a period of the synthesized value S.

10. An electronic apparatus according to claim 4, further comprising:

an acceleration sensor (107b, 108b, 109b) arranged to detect accelerations in three-axis directions perpendicular to each other and output acceleration signals X, Y, and Z corresponding to the accelerations in the axis directions, respectively,

wherein the calculation unit (103b) is arranged to calculate the synthesized value S using the acceleration signals X, Y, and Z by an expression

$S=(|X|^n+|Y|^n+|Z|^n)^{1/m}$, where n and m are the same integer or different integers equal to or larger than 3.

11. An electronic apparatus according to claim 10, wherein the calculation unit includes

an absolute value data calculation unit (114b) arranged to calculate absolute values of the acceleration signals X, Y, and Z and storing the absolute values as absolute value data in an absolute value data storage unit (118b),

an n-th power value data calculation unit (115b) arranged to calculate n-th power values of the respective absolute value data stored in the absolute value data storage unit and store the n-th power values as n-th power value data in an n-th power value data storage unit (119b),

an addition data calculation unit (116b) arranged to calculate an addition value obtained by adding the respective n-th power value data stored in the n-th power value storage unit and store the addition value as addition data in an addition data storage unit (402b), and

an m-power root data calculation unit (401 b) arranged to calculate the synthesized value S by calculating an m-th power root of the addition data stored in the addition data storage unit.

12. An electronic apparatus according to claim 10 or 11, wherein a plurality of the integers m and a plurality of the integers n equal to or larger than 3 are prepared and the calculation unit is arranged to calculate the synthesized value S by changing the integers m and n according to a level or a period of the synthesized value S.

13. An electronic apparatus according to any one of claims 1 to 12, further comprising:

a step number detection unit (120) is arranged to detect the number of steps based on the synthesized value.

14. An electronic apparatus according to claim 13, further comprising:

a threshold value calculation unit (119) arranged to calculate a moving average value of the synthesized values, wherein the step number detection unit is arranged to detect the number of steps based on the synthesized values and the moving average value.

15. An electronic apparatus according to claim 13 or 14, wherein the electronic apparatus includes a pedometer.

16. An electronic apparatus according to any one of claims 1 to15, wherein the acceleration sensors include a MEMS tri-axial acceleration sensor or three mono-axial acceleration sensors disposed in three-axis directions perpendicular to each other.

17. A program causing a computer of an electronic apparatus to execute a sequence of calculating a magnitude of an acceleration in at least one of three separate directions and calculating a synthesized value indicating the magnitudes of the accelerations in the three directions based on the calculated magnitude of the acceleration and the acceleration in the direction separate from at least one of the directions.

# FIG. 1

FIG. 2

# FIG. 3

# FIG. 4

# FIG. 5

# FIG. 6

# FIG. 7

# FIG. 8

# FIG. 9

FIG. 10

ACCELERATION WAVEFORM (THREE AXIS)

22

FIG. 11

SYNTHESIS WAVEFORM

# FIG. 12

# FIG. 13

EP 2 369 300 A2

ACCELERATION WAVEFORM (THREE AXIS)

TIME

FIG. 14

CUBIC ROOT SUM WAVEFORM

EP 2 369 300 A2

# FIG. 15

**EP 2 369 300 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010071078 A
- JP 2010071079 A
- JP 2010211250 A
- JP 3543778 B
- JP 2005038018 A